(19) Europäisches Patentamt / European Patent Office / Office européen des brevets

(11) **EP 2 100 920 A1**

(12) **EUROPEAN PATENT APPLICATION**

(43) Date of publication:
**16.09.2009 Bulletin 2009/38**

(51) Int Cl.:
*C08L 77/00* [(2006.01)]    *C08L 77/02* [(2006.01)]
*C08L 77/06* [(2006.01)]    *C08K 3/16* [(2006.01)]
*C08J 3/05* [(2006.01)]    *D01F 6/60* [(2006.01)]
*D01F 1/10* [(2006.01)]    *D01F 6/90* [(2006.01)]

(21) Application number: **08152691.5**

(22) Date of filing: **13.03.2008**

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: **Stichting Dutch Polymer Institute**
5612 AB  Eindhoven (NL)

(72) Inventors:
• **Harings, Jules**
5600 HG EINDHOVEN (NL)
• **Deshmukh, Yogesh, Sheshrao**
5600 MB Eindhoven (NL)
• **Vinken, Esther**
5600 MB Eindhoven (NL)
• **Rastogi, Sanjay**
Leicestershire Leicestershire LE11 3TU (GB)

(74) Representative: **DeltaPatents B.V.**
Fellenoord 370
5611 ZL Eindhoven (NL)

(54)    **Polyamide with reduced crystallinity**

(57)    The invention relates to a novel process for making compositions comprising a polyamid, water and a salt, having reduced crystallinity, wherein the process comprising the steps of:
a. mixing the polyamide, water and a salt
b. heating the mixture to a temperature in a range between 120 °C below the Brill temperature and 50 °C above the Brill temperature of the polyamide
c. optionally cooling down the mixture.
    Preferably in step b the water is heated under pressure to a temperature above 100 °C.

Figure 1. Optical micrographs (left) of oriented polyamide 4,6 crystals obtained after crystallization of the extensionally deformed aqueous gel by rinsing with water. In between crossed polars the change in birefringence by a sample rotation of 45° to the polarized light indicates the presence of orientation. Based on normalization of the crystalline $CH_2$ scissoring band at 1417cm$^{-1}$ in the dichroic measurements on PA 4,6 filaments (right), the Hermans orientation factor can be determined and appears to be 0.9

EP 2 100 920 A1

**Description**

The invention relates to a polyamide with reduced crystallinity, a process for making the polyamide and the use of the polyamide in for example fabrication of fibers. Polyamides with reduced crystallinity are known in the art. US 3,591,565 decribes polyamides containing alkali metal halide additives as void formation inhibitors. Polyhexamethylene adipamide resin pellets are coated with a binder composition and lithium chloride or lithium bromide, wherein the salts have been dried before use. The salt can also be added to the mixture of adipic acid and hexamethylenediamine before the formation of the polymer. After coating or polymerization, a polyamide is obtained containing a salt, which is extruded into a fiber and subsequently drawn to 4-6 times their undrawn length.

US 4,167,614 describes non-aromatic polyamides containing inorganic salts of the class of the halides of alkaline or alkaline-earth metals, and a process of multidirectionally orienting the obtained material at a prevalently amorphous state and developing of the crystallinity by a prolonged heating of the polyamide, while maintaining the material under the acquired draft and tension conditions. Examples are present with nylon 6 and LiCl, LiBr and CaCl2 as salts. Mixtures are prepared by heating the pure nylon 6 with the salts in the melt of the polymer.

Anciero etal (journal of Polymer Science: polymer Physics, vol 17, 1903-1912 (1979) describes that the addition of LiCl to nylon 6 causes a large depression of the melting temperature and of the crystallization rate of the pure polyamide. Vasanthan et al (Polymer 45 (2004) 4077-4085), shows a similar effect for the presence of GaCl3 as a salt in polyamide 66. The GaCl3 has however the disadvantage that removal from the polymer turned out to be difficult, and relaxation of polymer upon orientation occurs, thereby loosing the orientation and fiber properties of the drawn polyamide. JP1132822 and JP3009931 (Asahi Chemical) disclose the gelspinning of a polyamide containing a solvent and a salt, wherein the solvent is an organic solvent, that needs to be recovered after the gelspinning process.
Rastogi etal (Macromolecules 2004, 37, 8825-8828) disclose the dissolution of Nylon-4,6 in water, by heating the nylon in water at temperatures above 200°C.
The processes known in the literature have the disadvantage that meltprocessing is needed to obtain a mixture of polyamide and salt, which has disadvantages of for example degradation of polyamide or colouring of the polymer, or an organic solvent is used that needs to be recovered from the fibers after fiber formation.

There is a need for a simple and versatile process for obtaining a polyamide, wherein the crystallinity and/or the formation of crystallinity of the polyamide can be controlled. The present invention discloses a process for making a mixture comprising a polyamide, water and a salt, comprising the steps of

   a. Mixing a polyamide, water and a salt
   b. Heating the mixture to a temperature in a range between 120 °C below the Brill temperature and 50 °C above the Brill temperature of the polyamide

The process of the invention may be followed by other steps like for example cooling down the mixture, applying shear to the solution, rinsing the solution with water and the like. The order of mixing the components in step a is not critical. In step a the components can be mixed in different ways, like for example at once, or for example first a solution of water and salt is prepared, which is mixed with the polyamide, or in other ways.

In a preferred embodiment the water used in process step b of the process of the present invention is heated under pressure to a temperature above 100 °C.

PREFERRED EMBODIMENTS AND ADVANTAGES

A polyamide is a polymer containing amide moieties. These amide moieties are generally formed from the reaction of a carboxylic acid or acyl halides and an amine. The reaction is a polycondensation reaction, whereby water is formed as the reaction product, which needs to be removed from the mixture to obtain a high degree of polymerization.

Formation of polyamides is known in the art. The properties of the polyamides depend on the block lengths between the amide groups. Since the properties are also dependent on the amount of water in the polyamides, which absorb a significant amount of water due to the hydrophilic amide moieties, the comparison of the mechanical properties in Table 1 (below) is based on dry samples (containing less than 1 wt% of water).

Table 1 Properties of common polyamides

| Polyamide | Tensile strength | Elongation | Flexural Modulus | Impact strength | Impact strength |
|---|---|---|---|---|---|
|  | MPa | % | MPa | ft.lb/inc | J/m |
| 6 | 81 | 50-150 | 2800 | 1.0-1.2 | 53-64 |
| 11 | 55 | 200 | 1200 | 0.7-1.3 | 37-69 |

(continued)

| Polyamide | Tensile strength | Elongation | Flexural Modulus | Impact strength | Impact strength |
|---|---|---|---|---|---|
| | MPa | % | MPa | ft.lb/inc | J/m |
| 12 | 55 | 200 | 1100 | 1.8 | 96 |
| 4,6 | 99 | 40 | 3100 | 2.0 | 107 |
| 6,6 | 83 | 40-80 | 2800 | 1.0-1.2 | 53-64 |
| 6,9 | 55 | 125 | 2000 | 1.1 | 59 |
| 6,10 | 59 | 130 | 2000 | 1.1 | 59 |
| 6,12 | 55 | 150 | 2000 | 1.1 | 59 |

Examples of polyamides are the common polyamides listed in table 1, like polyamide 6, polyamide 11, polyamide 12, polyamide 4,6, polyamide 6,6, polyamide 6,9, polyamide 6,10, polyamide 6,12, but the potential combinations may extend beyond the 8 listed samples. Copolymers of polyamides with other monomers or blockcopolymers of polyamides can also be mentioned as examples of polyamides that can be used in the process of the present invention.
The viscosity average molecular weight of the polyamides used in the present invention ranges between $10^4$ to about $10^9$ g/mol. The molecular weight preferably ranges between $10^5$ and $10^7$. The viscosity average molecular weight of the polyamide is calculated from the Mark-Houwink equation:

$$[\eta]=KMW^a$$

The values for the constants K and a can be found in literature, like for example the Polymer Data Handbook, edited by James E. Mark, published by Oxford University Books (1999),

(http://www.qmc.ufsc.br/~minatti/docs/20061/poiymer data handbook.pdf).

For example for the system nylon 6,6/formic acid at 25 °C the value for K is 35.3 ml/g and the value for a = 0.786. The viscometric measurements are conducted at 25°C by using an Ubbelohde viscometer. The limiting viscosity number can be determined from the the following equation,

$$[\eta] = \frac{2}{C}(\eta_{rel}^{1/2} - 1)$$

where C is the polymer concentration.
The process of the present invention applies the polyamide in an amount between 1 and 95 weight percent (relative to the total of the composition), preferably between 2 and 80 wt%, or between 5 and 60 wt%.
In the process of the invention the polyamide is preferably dissolved in water under superheated conditions, this means at a temperature above 100 °C and under pressure. Under these conditions the hydrogen bonding efficiency between water molecules is believed to be reduced, which may facilitate the dissolution of the polyamide.
The temperature of the process of the invention is important for an intimate mixing of the salt with the polyamide and an effective dissolution of the polyamide. It has been surprisingly found, that dissolution of the polyamide occurs at relatively low temperatures when a solution of a salt is used, compared to methods known in literature.
It has been found that the optimum dissolution temperature depends on the polyamide used. The optimum temperature ranges around the so-called Brill temperature, which has been measured under ideal conditions for a number of polyamides (see Macromolecules 2000, 33, 2642-2650, and Table 2). The Brill transition temperature (Tb) is defined as the temperature at which the interchain (100) and the intersheet (010/110) reflections merge in X-ray scattering on heating a sample (see experimental part). The reported Brill temperatures are measured on crystals grown from good solvents under ideal conditions. The Brill temperature ranges from 90 to 250 °C, and is usually lower then the melting temperature of the polyamide. The reported Brill temperatures are measured under ideal conditions. In the process of the invention temperatures can be applied that differ from the Brill transition temperatures due to the non-ideal situation that may be present. The temperature of the present invention ranges between 120 °C below the Brill temperature to 50 °C above this temperature for a given polyamide. Preferably the temperature ranges between 100 °C below and 10 °C above the Brill temperature, more preferably between 80°C below and 10°C below the Brill temperature.

Table 2. Brill temperatures of even (X) - even(Y) polyamids (from Macromolecules **2000**, 33, 2642-2650).

| Y / X | 2 | 4 | 6 | 8 | 10 | 12 |
|-------|-----|-----|-----|-----|-----|-----|
| 4 | 240 | 170 | 190 | 190 | 160 | 180 |
| 6 | 174 | 245 | 230 | 194 | 184 | 183 |
| 8 | 177 | 250 | 203 | 213 | 222 | 213 |
| 10 | 181 | 240 | 220 | 185 | 200 | 188 |
| 12 | 158 | 235 | 215 | 202 | 193 | 181 |
| 18 | | | 190 | | | |

It may sometimes be difficult to determine the Brill transition temperature, or for some polyamides the Brill transition temperature may not exist. In that case, the mixture comprising polyamide, water and salt is heated to a temperature between 150 and 10 °C below the melting temperature of the polyamide, or preferably between 140 and 30 °C, more preferably between 130 and 50 °C below the melting temperature of the polyamide. In case a polyamide does not have a melting temperature, the mixture comprising polyamide, water and salt is heated to a temperature between 150 and 10 °C below the degradation temperature of the polyamide, or preferably between 140 and 30 °C, more preferably between 130 and 50 °C below the degradation temperature of the polyamide.

The surprisingly low melting temperatures of the polyamides in the water/salt mixtures allows to design a simple process, wherein the application of said process reduces the amount of energy needed to dissolve the polyamide, side effects like hydrolysis of the polyamides or thermal degradation are reduced, and speed of the process can be enhanced. The low melting temperatures also allow to design for example an environmental friendly gelspinning process to make ultra strong nylon fibers. The amount of water generally ranges between 20 and 95 wt% (relative to the total of the composition). The amount of water present in the process of the invention is higher then the amount of water that may be present in the polyamide as such, due to its hygroscopic nature. It is known that a polyamide generally may comprise a few wt% of water. Preferably the amount of water ranges between 30 and 90 wt%, or between 40 and 80wt% of the total composition.

The process of the present invention applies a salt to suppress the formation of crystals or to lower the crystallization temperature of the polyamide and also to lower the dissolution temperature of the polyamide, as indicated before. It is possible to use a single salt, or also mixtures of salts can be used.

The salt preferably is an alkali metal salt. Preferably the salt contains an anion that is weakly hydrated according to the Hoffmeister series of ions. Examples of such weakly hydrated anions are $Cl^-$, $Br^-$, $I^-$, $NO_3^-$, $ClO_3^-$, $BrO_3^-$, $IO_3^-$ or $ClO_4^-$. Preferred anions are selected from the group consisting of $Br^-$, $I^-$, $NO_3^-$, $CLO_3^-$, $BrO_3^-$ or $ClO_4^-$. Most preferred anions are $Br^-$ $I^-$, $ClO_3^-$ or $ClO_4^-$. Preferably the salt contains a cation that is strongly hydrated (according to the Hoffmeister series of ions). Examples of cations that are strongly hydrated are $K^+$, $Na^+$, $Li^+$, $Zn^{2+}$, $Ca^{2+}$, $Mg^{2+}$, $Al^{3+}$ and $Ga^{3+}$. Preferred cations are $Na^+$, $Li^+$, $Zn^{2+}$, $Ca^{2+}$, $Mg^{2+}$, because of the high solubility of these cations when present in aqueous solutions. Most preferred cations are $Na^+$, $Li^+$, $Ca^{2+}$. Most preferably, the salt is selected from the group consisting of LiBr, LiI, NaBr and NaI.

The concentration of the salt that may be used in the process of the present invention may be determined by the depression of the melting point of the polyamide that is desired to be obtained or alternatively by the lowering of the dissolution temperature of the polyamide that is desired. In one embodiment of the invention a polyamide can be obtained that has no crystallinity and acts like a gel in water or as an aqueous solution. In another embodiment of the invention, the polymer is present as a suspension and has a reduced melting point between for example -50 °C and for example 150 °C, preferably a melting point between 20 and 120 °C or between 30 and 100 °C.

The ratio of salt to polyamide, required to obtain complete suppression of crystallization at 30°C, ranges between 0.1 and 3 mol salt relative to the mols of amide bonds present in the polymer. Preferably the ratio is between 0.2 and 1.5, more preferably between 0.25 and 1.0, most preferably between 0.3 and 0.9. The effectivity of the suppression of the crystallization temperature also depends on the polymer concentration in water. When low polymer concentrations are applied (for example 10 wt% polymer), the molar ratio salt/amide units is preferably between 2 and 3, while at very high polymer concentrations like for example 60 wt%, the molar ratio salt/amide units ranges between 0.2 and 0.5 in order to obtain complete suppression of crystallinity. In general, for complete suppression of crystallinity the following relation can be used:

$$\text{Solubilization Area (SA)} = \text{Polymer concentration (wt\%)} \times \text{molar ratio (salt/amide units)}$$

, which ranges between 10 and 40, preferably between 15 and 30.

In one embodiment of the invention, the polyamide is dissolved in water containing between 3 and 20 mol/liter of salt, preferably between 4 and 15 mol/l, more preferably between 5 and 10 mol/l.

The polyamides typically dissolve at a temperature below the Brill transition temperature when salts are present. In general the reduction of dissolution temperature increases when higher concentrations of salt are present. The reduction of the dissolution temperature can be calculated as the Tb-Td (Tb is the Brill transition temperature and Td is the dissolution temperature). The ratio of [Tb-Td]/ salt concentration (mol/l) ranges between 3 and 10, preferably between 4 and 8.

These amounts of salts used to suppress crystallinity are unexpectedly low compared to other literature data. In the cited literature equimolar amounts of salts to amide moieties are needed to fully suppress crystallinity. In the process of the present invention lower amounts of salts can be efficiently used to obtain the same or higher reduction in crystallinity. This can give all kinds of advantages like for example an easier and cheaper process, and less recovery of salts from the polyamide in subsequent process steps.

The product of the process of the present invention is a composition comprising a polyamide, water and a salt. The product of the invention may be present as a gel or as an aqueous solution. This unique composition can have very interesting properties and applications depending on the ratio of the different components. The gel or aqueous solution can be used in for example a gel spinning process. Gel spinning processes are known to the skilled man. The gel can also be used as an amorphous polyamide, as a coating composition, for example by adding the composition to a substrate and washing away or exchanging the specific salt with water to restore crystallinity again of the polyamide and form a layer of polyamide on the substrate.

The aqueous solution can also be used to make oriented polyamide filaments. This can for example be done, by taking the aqueous solution containing polyamide, water and salt, applying this to a substrate, applying an extensional deformation by for example shearing/deforming the solution with a razor blade or doctor's blade, rinsing the extensionally deformed solution with water, thereby allowing the polyamide to crystallize as oriented filaments. These filaments can have a Hermans orientation factor of 0.8, preferably 0.85 or even above 0.9.

The invention is illustrated by means of examples, which are not intended to limit the scope of the invention.

Example 1.

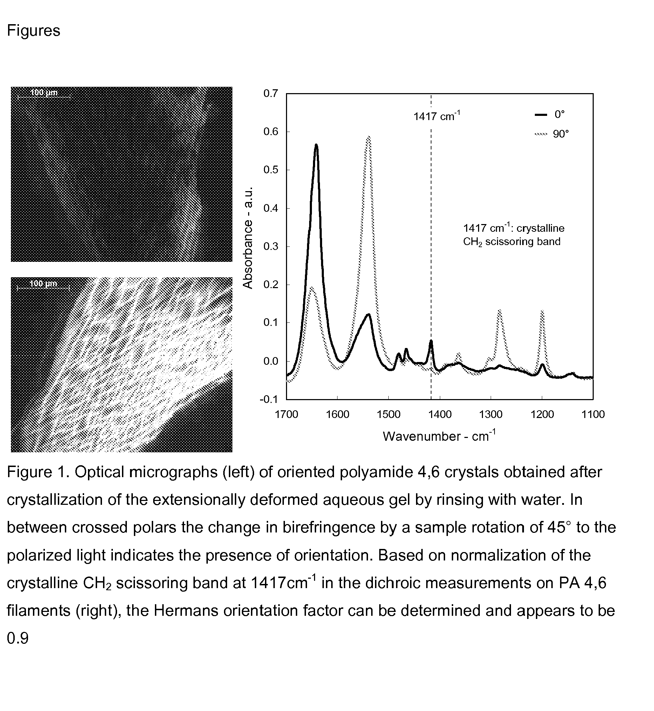

In a closed reactor, 40 w/w-% Polyamide 4,6 is immersed in an 9M (M = mol/l) aqueous LiBr solution and heated from room temperature to 220°C at a rate of 50°C/min using linkam TMS93 control unit. Since the evaporation of water is inhibited, the water vapor pressure at 220°C reaches approximately 20bar. The dissolution temperature of the polyamide 4,6 is 137°C, which is 158°C below the melting temperature and 108°C below the Brill transition. After an isothermal period of 3 minutes the solution is cooled by flushing the reactor with compressed air. At room temperature the ions shield the hydrogen bonding effectively, meaning that crystallization is suppressed completely. The gel/ solution obtained, is transferred to a zinc selenium disk and exposed to extensional deformation using a razor blade. Immediately after deformation of the gel, where hydrogen bonding is shielded, the gel was rinsed with water to remove the ions to form oriented polyamide 4,6 crystals. The oriented structures were characterized by Optical Microscopy and Dichroic Measurements using polarized FTIR (figure 1). Oriented Polyamide 6 and 6,6 structures are obtained analogously using Lil to shield the hydrogen bonding between the amide moieties.

Example 2.

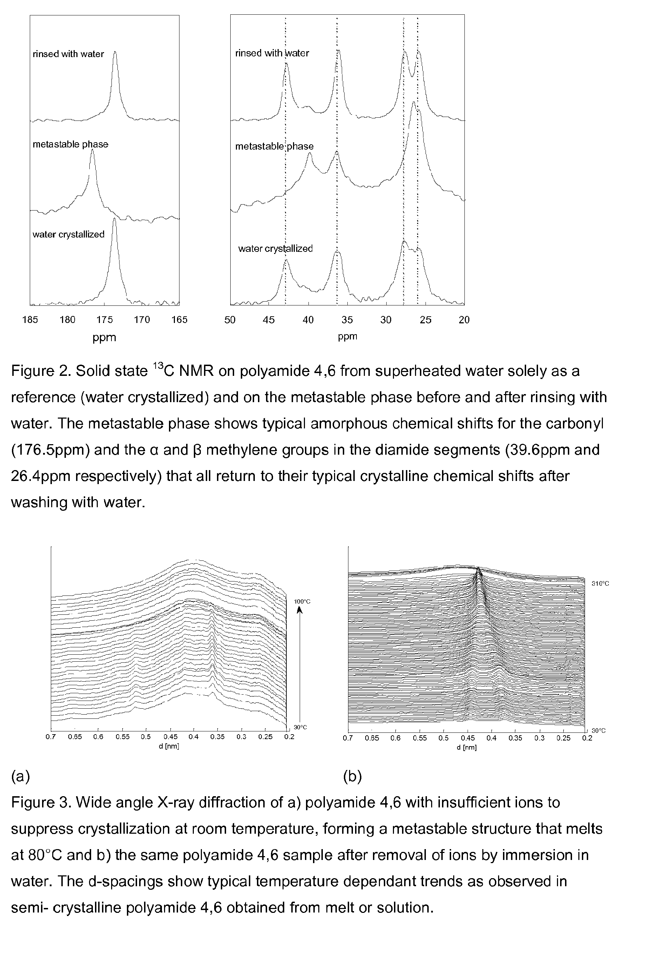

In a closed reactor, 40 w/w-% Polyamide 4,6 is immersed in an 7M aqueous LiBr solution and heated from room temperature to 220°C at a rate of 50°C/min using linkam TMS93 control unit. Since the evaporation of water is inhibited, the water vapor pressure at 220°C reaches approximately 20bar. The dissolution temperature of the polyamide 4,6 is 158°C, which is 137°C below the melting temperature and 87°C below the Brill transition. After an isothermal period of 3 minutes the solution is cooled by flushing the reactor with compressed air. At room temperature insufficient ions are present to shield the hydrogen bonding effectively, resulting in a metastable phase in water with a reduced melting point between room temperature and the dissolution temperature. The reversible nature of the present invention is depicted by solid state $^{13}$C measurements on the metastable crystals before and after rinsing with water to remove the shielding ions (figure 2). The metastable phase shows typical amorphous chemical shifts for the carbonyl and the $\alpha$ and $\beta$ methylene groups in the diamine segments. It has to be noted that in symmetric polyamides the chemical shifts for $\alpha$ and $\beta$ methylene segments in the diacid segment are similar in the amorphous and crystalline state. Also from a crystallographic point of view the reversible concept is proven. In figure 3a the diffraction pattern of the metastable phase, which contains a broad amorphous component, melts at about 80°C on heating with 10°C. After washing the same sample with water, in analogy to the $^{13}$C NMR experiment, the typical merging of the intersheet and interchain reflections (The Brill Transition) in polyamide 4,6 and the melting at 295°C are observed in figure 3b.

Example 3.

Using differential scanning calorimetry (DSC) the dissolution and precipitation of commercial polyamide (PA) 46 (Stanyl®, DSM), 6 (Ultramid® B, BASF) and 66 (Ultramid® A, BASF) (10 to 60%-w/w) in superheated water, whether or not in the presence of ions, was monitored in Perkin Elmer high volume DSC pans under a nitrogen atmosphere. The cryo- ground polymeric samples were immersed in the aqueous solutions and exposed to a temperature program ranging between 30°C and 240°C at a rate of 10°C/min. To ensure an equilibrium state, an isothermal period of 3 minutes was applied at the temperature limits. Since the evaporation of water is inhibited, the sealed environment facilitates the superheated conditions automatically. Based on the Hofmeister series solubilizing salts were selected comprising the kosmotropic cation $Li^+$ and chaotropic anions $Br^-$ and $I^-$. Stock solutions were prepared with ionic strengths ranging between 0mol/l and 10mol/l.
Results of the DSC experiments can be found in tables 3.1-3.6, where dissolution and crystallisation temperatures are listed of the different polyamide/water/salt systems that have been examined.

Dissolution temperatures of PA46 in LiBr-solutions

Table 3.1

| Molarity LiBr in water | Wt% polyamide 46 in the mixture | | | | | |
|---|---|---|---|---|---|---|
| | 10w/w-% | 20w/w-% | 30w/w-% | 40w/w-% | 50w/w-% | 60w/w-% |
| mol/l | °C | °C | °C | °C | °C | °C |
| 1 | 176.0 | 177.8 | 177.8 | 176.0 | 175.6 | 180.0 |
| 2 | 174.8 | 173.8 | 175.8 | 177.6 | 175.6 | 179.2 |
| 3 | 175.7 | 172.1 | 172.5 | 173.3 | 173.8 | 175.5 |
| 4 | 174.1 | 176.4 | 170.3 | 171.6 | 173.0 | 171.3 |
| 5 | 170.0 | 169.6 | 167.3 | 167.8 | 168.6 | 170.1 |
| 6 | 160.6 | 164.4 | 165.4 | 167.1 | 163.9 | 165.3 |
| 7 | 152.8 | 154.5 | 159.4 | 157.5 | 159.1 | 162.4 |
| 8 | - | - | 148.8 | 153.4 | 156.7 | 156.7 |

Crystallization temperature of PA46 in LiBr-solutions

Table 3.2

| Molarity LiBr in water | Wt% polyamide 46 in the mixture | | | | | |
|---|---|---|---|---|---|---|
| | 10w/w-% | 20w/w-% | 30w/w-% | 40w/w-% | 50w/w-% | 60w/w-% |
| mol/l | °C | °C | °C | °C | °C | °C |
| 1 | 138.1 | 144.7 | 140.7 | 140.0 | 138.2 | 145.5 |
| 2 | 132.1 | 136.0 | 137.8 | 137.7 | 138.5 | 144.5 |
| 3 | 129.5 | 130.3 | 130.7 | 134.0 | 135.0 | 137.3 |
| 4 | 119.8 | 122.8 | 123.3 | 128.1 | 131.3 | 137.8 |
| 5 | 109.4 | 110.1 | 119.8 | 118.4 | 122.9 | 129.8 |
| 6 | Nc | 101.0 | 113.4 | 107.6 | 112.2 | 120.4 |
| 7 | Nc | nc | 76.2 | 88.0 | 101.2 | 114.7 |

(continued)

| mol/l | °C | °C | °C | °C | °C | °C |
|---|---|---|---|---|---|---|
| 8 | Nc | nc | nc | nc | 90.8 | 107.7 |

| Nc: no crystallization observed at 30°C |
|---|

Dissolution temperatures of PA66 in LiI-solutions

Table 3.3

| Molarity LiI in water | Wt% polyamide 66 in the mixture | | | |
|---|---|---|---|---|
| | 30w/w-% | 40w/w-% | 50w/w-% | 60w/w-% |
| mol/l | °C | °C | °C | °C |
| 1 | 176.1 | 178.2 | 176.5 | 177.5 |
| 2 | 173.5 | 173.8 | 175.3 | 175.8 |
| 3 | 169.2 | 168.5 | 169.3 | 170.2 |
| 4 | 160.1 | 163.3 | 163.8 | 167.3 |
| 5 | 152.1 | 154.7 | 156.6 | 156.3 |
| 6 | 141.7 | 145.7 | 148.4 | 150.6 |

Crystallization temperature of PA66 in LiI-solutions

Table 3.4

| Molarity LiI in water | Wt% polyamide 66 in the mixture | | | |
|---|---|---|---|---|
| | 30w/w-% | 40w/w-% | 50w/w-% | 60w/w-% |
| mol/l | °C | °C | °C | °C |
| 1 | 143.9 | 143.7 | 143.4 | 143.3 |
| 2 | 135.7 | 136.0 | 139.0 | 139.5 |
| 3 | 125.1 | 126.0 | 128.8 | 132.8 |
| 4 | 108.7 | 116.0 | 119.4 | 122.5 |
| 5 | Nc | 102.7 | 104.0 | 112.4 |
| 6 | Nc | nc | 88.3 | 96.0 |

Dissolution temperatures of PA6 in LiI-solutions

Table 3.5

| Molarity LiI in water | Wt% polyamide 6 in the mixture | | | |
|---|---|---|---|---|
| | 30w/w-% | 40w/w-% | 50w/w-% | 60w/w-% |
| mol/l | °C | °C | °C | °C |
| 1 | 153.9 | 154.2 | 153.7 | 153.6 |
| 2 | 149.2 | 150.0 | 151.9 | 150.0 |
| 3 | 138.6 | 143.2 | 143.0 | 144.5 |

(continued)

| mol/l | °C | °C | °C | °C |
|---|---|---|---|---|
| 4 | 136.3 | 136.8 | 138.0 | 138.1 |
| 5 | 124.5 | 120.5 | 125.5 | 124.7 |
| 6 | 111.3 | 114.0 | 116.8 | 120.5 |

Crystallization temperature of PA6 in LiI-solutions

Table 3.6

| Molarity LiI in water | Wt% polyamide 6 in the mixture | | | |
|---|---|---|---|---|
| | 30w/w-% | 40w/w-% | 50w/w-% | 60w/w-% |
| mol/l | °C | °C | °C | °C |
| 1 | 111.1 | 112.9 | 113.1 | 111.7 |
| 2 | 99.7 | 101.9 | 104.2 | 103 |
| 3 | 88.2 | 90.8 | 91.5 | 95.7 |
| 4 | Nc | 81.2 | 82.7 | 87.5 |
| 5 | Nc | nc | 69.8 | 72.5 |
| 6 | Nc | nc | nc | 58.2 |

**Claims**

1. A process for making a mixture comprising a polyamide, water and a salt, comprising the steps of

    a. mixing the polyamide, water and a salt
    b. heating the mixture to a temperature in a range between 120 °C below the Brill temperature and 50 °C above the Brill temperature of the polyamide.

2. A process for making a mixture comprising a polyamide, water and a salt, comprising the steps of

    a. Mixing the polyamide, water and a salt
    b. Heating the mixture to a temperature in a range between 150 °C and 10 °C below the melting temperature of the polyamide.

3. The process according to claim 1 or 2, wherein the mixture is cooled down to room temperature.

4. The process according to anyone of claims 1-3, wherein in step b the water is heated under pressure to a temperature above 100 °C.

5. The process according to anyone of claims 1-4, wherein the polyamide has a viscosity average molecular weight between $10^4$ to about $10^9$.

6. The process according to anyone of claims 1-5, wherein the polyamide is present in an amount between 1 and 95 weight percent (relative to the total of the composition).

7. The process according to anyone of claims 1-6, wherein the polyamide is present in an amount between 5 and 60 wt%.

8. The process according to anyone of claims 1, 3-7, wherein the mixture is heated to a temperature between 100 °C below and 30 °C above the Brill temperature of the polyamide.

9. The process according to anyone of claims 1-8, wherein the amount of water ranges between 20 and 95 wt% (relative to the total of the composition).

10. The process according to anyone of claims 1-9, wherein the amount of water ranges between 40-80 wt%.

11. The process according to anyone of claims 1-10, wherein the salt is an alkali metal salt.

12. The process according to anyone of claims 1-11, wherein the salt comprises an anion selected from Cl⁻, Br⁻, I⁻, $NO_3^-$, $ClO_3^-$, $BrO_3^-$, $IO_3^-$ or $ClO_4^-$.

13. The process according to anyone of claims 1-12, wherein the salt comprises an anion from the group consisting of Br⁻ I⁻, $ClO_3^-$ or $ClO_4^-$.

14. The process according to anyone of claims 1-13, wherein the salt comprises cations selected from the group consisting of Na⁺, Li⁺, Ca²⁺.

15. The process according to anyone of claims 1-14, wherein the salt is chosen from the group consisting of LiBr, LiI, NaBr, and NaI.

16. The process according to anyone of claims 1-15, wherein the concentration of salt in water ranges between 3 and 20 mol/l salt.

17. A composition containing a polyamide having a viscosity average molecular weight between $10^4$ to about $10^9$, between 15 and 70 wt% water and a salt.

18. The composition according to claim 17, wherein the polyamide is chosen from the group consisting of polyamide 6, polyamide 11, polyamide 12, polyamide 4,6, polyamide 6,6, polyamide 6,9, polyamide 6,10, polyamide 6,12.

19. The composition according to claim 17 or 18, wherein the composition has a melting point between -50 and 150 °C.

20. The composition according to claims 17 or 18, wherein the composition has a melting point between 20 and 100 °C.

21. The composition according to anyone of claims 17-19, wherein the salt is present in a concentration between 3 and 20 mol/l.

22. Use of the composition according to anyone of claims 17-21 or as obtained by a process according to anyone of claims 1-16 for making fibers of polyamide.

23. Oriented polyamide fibers having a Hermans orientation factor of at least 0.8.

24. The fibers according to claim 23, wherein the Hermans orientation factor is at least 0.9.

25. A method of making oriented polyamide fibers, comprising the steps of taking the composition according to anyone of claims 17-21, applying the composition to a the substrate, applying an extensional deformation to the composition, rinsing the extensionally deformed solution with water, thereby allowing the polyamide to crystallize as oriented filaments.

Figures

Figure 1. Optical micrographs (left) of oriented polyamide 4,6 crystals obtained after crystallization of the extensionally deformed aqueous gel by rinsing with water. In between crossed polars the change in birefringence by a sample rotation of 45° to the polarized light indicates the presence of orientation. Based on normalization of the crystalline $CH_2$ scissoring band at 1417cm$^{-1}$ in the dichroic measurements on PA 4,6 filaments (right), the Hermans orientation factor can be determined and appears to be 0.9

Figure 2. Solid state $^{13}$C NMR on polyamide 4,6 from superheated water solely as a reference (water crystallized) and on the metastable phase before and after rinsing with water. The metastable phase shows typical amorphous chemical shifts for the carbonyl (176.5ppm) and the α and β methylene groups in the diamide segments (39.6ppm and 26.4ppm respectively) that all return to their typical crystalline chemical shifts after washing with water.

(a)                                                     (b)

Figure 3. Wide angle X-ray diffraction of a) polyamide 4,6 with insufficient ions to suppress crystallization at room temperature, forming a metastable structure that melts at 80°C and b) the same polyamide 4,6 sample after removal of ions by immersion in water. The d-spacings show typical temperature dependant trends as observed in semi- crystalline polyamide 4,6 obtained from melt or solution.

**European Patent Office**

## EUROPEAN SEARCH REPORT

Application Number

EP 08 15 2691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 467 186 A (SUEUR CAIRNS THEODORE LE) 12 April 1949 (1949-04-12)<br>* example 3 *<br>* column 6, line 17 - line 23 *<br>* column 6, line 56 - line 66 *<br>----- | 1-21 | INV.<br>C08L77/00<br>C08L77/02<br>C08L77/06<br>C08K3/16<br>C08J3/05<br>D01F6/60<br>D01F1/10<br>D01F6/90 |
| X | A. V. TOKAREV, V. P. PUTYRSKII, S. F. KONEV, V. V. ISTOMIN, V. A. POPOV AND A. A. YARUNOV: "Orientation of high-modulus polyamide fibers"<br>MECHANICS OF COMPOSITE MATERIALS, [Online] vol. 23, no. 5, September 1988 (1988-09), pages 529-533, XP002484661<br>New York<br>ISSN: 1573-8922<br>Retrieved from the Internet:<br>URL:http://www.springerlink.com/content/hk3803043561j823/> [retrieved on 2008-06-17]<br>* page 529, line 1 - line 6 *<br>* page 532; table 3 *<br>----- | 23,24 | |
| X,Y | KIYOICHI MATSUMOTO, HIROYUKI UEJIMA: "Regenerated protein fibers. I. Research and development of a novel solvent for silk fibroin"<br>JOURNAL OF POLYMER SCIENCE PART A: POLYMER CHEMISTRY,<br>vol. 35, no. 10,<br>30 July 1997 (1997-07-30), pages 1949-1954, XP002484904<br>* abstract *<br>* page 1950, column 1, line 13 - line 20 *<br>* page 1950; table 1 *<br>-----<br>-/-- | 1-25 | TECHNICAL FIELDS SEARCHED (IPC)<br><br>C08K<br>C08J<br>C08L<br>D01F |

The present search report has been drawn up for all claims

| Place of search | Date of completion of the search | Examiner |
|---|---|---|
| Munich | 11 July 2008 | Barrère, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## European Patent Office

## EUROPEAN SEARCH REPORT

Application Number

EP 08 15 2691

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 4 167 614 A (CIFERRI ALBERTO ET AL) 11 September 1979 (1979-09-11) * claims 1,13 * * examples 1,5 * * column 2, line 41 - line 47 * ----- | 1-25 | |
| Y | WEVERS M G M ET AL: "Full Dissolution and Crystallization of Polyamide 6 and Polyamide 4.6 in Water and Ethanol" LECTURE NOTES IN PHYSICS,, vol. 714, 1 January 2007 (2007-01-01), pages 153-168, XP009101623 ISSN: 1616-6361 * page 157, line 4 - line 16; figure 9.1 * ----- | 1-25 | |
| Y | B. VALENTI, E. BIANCHI, G. GREPPI, A. TEALDI, AND A. CIFERRI: "Bulk properties of synthetic polymer-inorganic salt systems. Melting behavior of salted poly(caproamide)" THE JOURNAL OF PHYSICAL CHEMISTRY, vol. 77, no. 3, 1 February 1973 (1973-02-01), pages 389-395, XP002484725 * abstract * * page 392; figure 4 * * page 395, column 2, line 16 - line 35 * ----- | 1-25 | TECHNICAL FIELDS SEARCHED (IPC) |

The present search report has been drawn up for all claims

| Place of search | Date of completion of the search | Examiner |
|---|---|---|
| Munich | 11 July 2008 | Barrère, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                            

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 2691

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2008

| Patent document cited in search report | | Publication date | Patent family member(s) | | Publication date |
|---|---|---|---|---|---|
| US 2467186 | A | 12-04-1949 | FR | 951762 A | 03-11-1949 |
| US 4167614 | A | 11-09-1979 | DE | 2646623 A1 | 28-04-1977 |
| | | | FR | 2328059 A1 | 13-05-1977 |
| | | | GB | 1558820 A | 09-01-1980 |
| | | | IT | 1056302 B | 30-01-1982 |
| | | | NL | 7611433 A | 19-04-1977 |

EPO FORM P0459

For more details about this annex : see Official Journal of the European Patent Office, No. 12/82

**EP 2 100 920 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3591565 A
- US 4167614 A
- JP 1132822 A
- JP 3009931 B

**Non-patent literature cited in the description**

- **Anciero et al.** *journal of Polymer Science: polymer Physics,* 1979, vol. 17, 1903-1912
- **Vasanthan et al.** *Polymer,* 2004, vol. 45, 4077-4085
- **Rastogi et al.** *Macromolecules,* 2004, vol. 37, 8825-8828
- Polymer Data Handbook. Oxford University Books, 1999
- *Macromolecules,* 2000, vol. 33, 2642-2650